(19) **Europäisches Patentamt**

**European Patent Office**

**Office européen des brevets**

(11) **EP 1 155 338 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(21) Anmeldenummer: **00902576.8**

(22) Anmeldetag: **11.01.2000**

(51) Int Cl.⁷: $G01R\ 31/327$, H02H 7/055

(86) Internationale Anmeldenummer:
**PCT/EP2000/000111**

(87) Internationale Veröffentlichungsnummer:
**WO 2000/050910 (31.08.2000 Gazette 2000/35)**

(54) **VERFAHREN ZUR ÜBERWACHUNG VON STUFENSCHALTERN**

METHOD OF CONTROLLING STEP SWITCHES

PROCEDE DE SURVEILLANCE DE COMMUTATEURS A GRADINS

(84) Benannte Vertragsstaaten:
**AT BE CH CY DE DK ES FI FR GB GR IE IT LI LU MC NL PT SE**

(30) Priorität: **24.02.1999 DE 19907834**

(43) Veröffentlichungstag der Anmeldung:
**21.11.2001 Patentblatt 2001/47**

(73) Patentinhaber: **Maschinenfabrik Reinhausen GmbH**
**93059 Regensburg (DE)**

(72) Erfinder:
• **DOHNAL, Dieter**
**D-93138 Lappersdorf (DE)**
• **VIERECK, Karsten**
**D-93128 Diesenbach (DE)**
• **SCHMECKEBIER, Mario**
**D-93057 Regensburg (DE)**

(56) Entgegenhaltungen:
**DE-C- 19 746 574**

• **PATENT ABSTRACTS OF JAPAN vol. 010, no. 011 (E-374), 17. Januar 1986 (1986-01-17) & JP 60 176213 A (TOSHIBA KK), 10. September 1985 (1985-09-10) in der Anmeldung erwähnt**
• **PATENT ABSTRACTS OF JAPAN vol. 1997, no. 12, 25. Dezember 1997 (1997-12-25) & JP 09 213542 A (TOSHIBA CORP), 15. August 1997 (1997-08-15)**

**Beschreibung**

Die Erfindung betrifft ein Verfahren zur Überwachung von Stufenschaltern gemäß dem Oberbegriff des ersten Patentanspruches.

Ein solches Verfahren ist bereits bekannt.
Die japanische Patentveröffentlichung Sho-60-176213, offengelegt am 10.09.85, beschreibt einen Stufenschalter mit einem ihn betätigenden Motorantrieb; Motorantrieb und angetriebener Stufenschalter sind dabei durch einen Antriebswellenzug miteinander verbunden. Zur Überwachung der ordnungsgemäßen Funktion des Stufenschalters wird bei jeder Betätigung des Stufenschalters das jeweilige momentane Drehmoment an der ihn betätigenden Antriebswelle ermittelt und als Istwert mit einem jeweils vorab schalterspezifisch festgelegten Drehmomentenverlauf, dem Sollwert, verglichen. Bei Abweichungen, die eine bestimmte Schwelle überschreiten, wird eine Fehlermeldung erzeugt.

Die japanische Patentveröffentlichung Sho-62-172240, offengelegt am 11.11.87, bezieht sich ebenfalls auf ein solches Überwachungsveriahren anhand der Überwachung des Drehmomentes an der Antriebswelle und beschreibt eine Drehmomenterfassungseinheit, die direkt an der Antriebswelle angeordnet ist, auf direktem, mechanischem Wege das Drehmoment mißt und in eine elektrische Größe umwandelt und nachfolgend einen Vergleich des jeweiligen - elektrischen - Istwertes mit dem korrespondierenden Sollwert ermöglicht.

Aus dem Vortrag von Professor Gorgius "Technical diagnostics on tap changers for large power transformers" auf dem "8th Intemational IMEKO Symposium on Technical Diagnostics" und den dazu veröffentlichten Symposiumsunterlagen ist es bei einem solchen gattungsgemäßen Verfahren auch bereits bekannt, das jeweilige aktuelle Drehmoment an der Antriebswelle auf indirektem Wege durch Messung der Wirkleistung, die der Antriebsmotor aufnimmt, zu ermitteln. Die dabei entsprechend durchzuführenden Schritte sind dem Fachmann geläufig: Es werden mittels bekannter Meßanordnungen, Strom- und Spannungswandlem etwa, Strom, Spannung und cos φ am Antriebsmotor gemessen und daraus die Wirkleistung Pw berechnet. Anhand der jeweiligen spezifischen Motorkennlinie $M_d = f(Pw)$ kann dann das entsprechende Drehmoment berechnet werden.

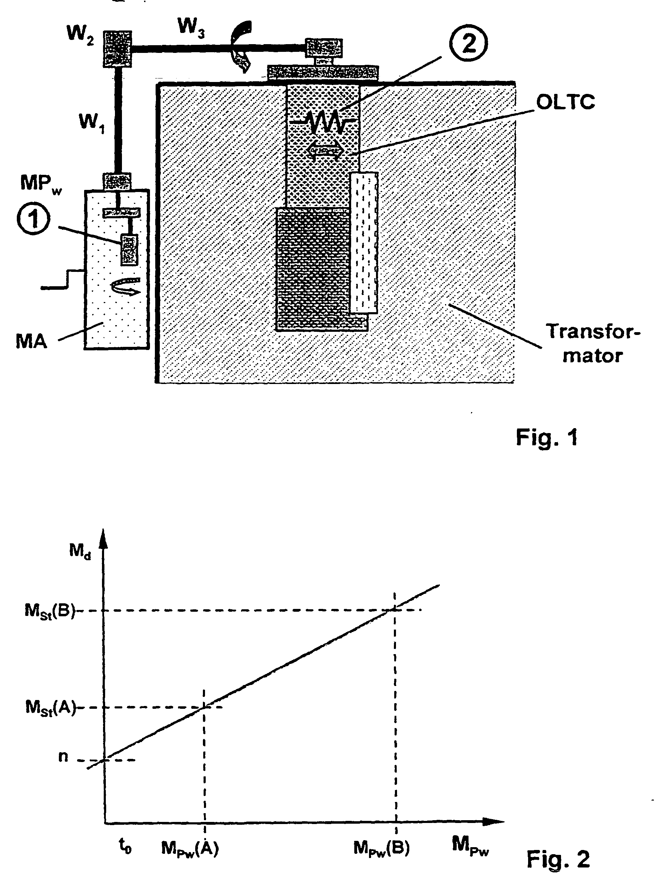

Diese indirekte Ermittlung des Drehmomentes der Antriebswelle ist an sich eine elegante und relativ einfach scheinende Lösung. Zum einen wird dadurch der Einbau von Drehmomentmeßnaben oder anderen mechanischen Meßmitteln an der Antriebswelle vermieden, zum anderen entfällt die sonst zusätzlich noch erforderliche Umwandlung der gemessenen mechanischen Größe in eine für den nachfolgenden Ist-Sollwert-Vergleich besser geeignete elektrische Größe. Trotz dieser Vorteile hat sich eine solche Überwachung von Stufenschaltem durch einen Drehmomentvergleich, ermittelt aus der Wirkleistung des Antriebsmotors, bisher nicht durchgesetzt. Der Hauptgrung dafür liegt darin, daß das rechnerisch ermittelte Drehmoment das Drehmoment am Antriebsmotor, genauer gesagt an dessen Antriebswellenende, das mit dem zum Stufenschalter führenden Antriebswellenzug verbunden ist, repräsentiert. Überwacht werden soll jedoch nicht das Drehmoment an dieser Stelle, sondern vielmehr das Drehmoment am anderen Ende dieses Antriebswellenzuges, nämlich am Stufenschalter. In Figur 1 ist dieser Zusammenhang schematisch dargestellt: In einen Transformatorkessel T ist ein Stufenschalter OLTC versenkt, seitlich am Transformatorkessel T ist ein Motorantrieb MA angeordnet, von dem ein Antriebswellenzug W1, W2, W3 zum Stufenschalter OLTC führt. Mit den bekannten, weiter oben erläuterten Verfahren wird das Drehmoment MPw an der Stelle "1" ermittelt, die sich im Antriebsmotor des Motorantriebes befindet; für eine Überwachung relevant wäre statt dessen ein - nicht bekanntes - Drehmoment MSt an der Stelle "2", die sich im Stufenschalter befindet. Erschwerend kommt noch dazu, daß es keinen konstant bleibenden mathematischen Bezug zwischen dem errechneten Drehmoment MPw und dem realen Drehmoment im Stufenschalter MSt gibt. Vielmehr verändern sich durch Temperatureinflüsse. Alterungen und Verschleißerscheinungen der Mechanik des Stufenschalters, der Lagerstellen und durch andere Einflüsse während der gesamten Betriebsdauer des Stufenschalters, die sich in der Regel über viele Jahre erstreckt, die dort auftretenden Drehmomente MSt in Relation zu den errechneten Drehmomenten MPw. Es ist also zwischen dem Antriebsmotor des Motorantriebes und dem von ihm angetriebenen Stufenschalter kein stabiles, d. h. konstantes Übertragungsverhalten hinsichtlich der Drehmomentverläufe gegeben.

Aufgabe der Erfindung ist es demnach, ein gattungsgemäßes Verfahren anzugeben, das bei jeder Schaltung eine Kalibrierung, d. h. Neuberechnung des Zusammenhanges zwischen MPw und MSt und damit des Übertragungsverhaltens vornimmt, um die tatsächlichen realen Drehmomentwerte MSt, unabhängig von den genannten Einflußfaktoren, für eine Überwachung, d. h. einen Soll-IstwertVergleich, zur Verfügung zu haben.

Diese Aufgabe wird erfindungsgemäß durch ein Verfahren mit den Merkmalen des unabhängigen Patentanspruches 1 gelöst. Die Vorteile dieses erfindungsgemäßen Verfahrens liegen darin, daß durch die Auswertung der bereits erfolgten Schaltung bzw. mehrerer bereits erfolgter Schaltungen des Stufenschalters eine aktuelle Anpassung der Übertragungsstrecke, d. h. des Zusammenhanges MSt = f(MPw) erfolgt. Genauer gesagt: Für die Berechnung des Verlaufes des Drehmomentes MSt bei einer aktuellen Schaltung des Stufenschalters wird aus den entsprechenden Verhältnissen bei der vorausgegangenen (letzten) Schaltung eine Übertragungsfunktion ermittelt usw. Das erfindungsgemäße Verfahren läßt sich noch weiter verfeinem. Besonders vorteilhaft ist es, zusätzlich noch einen sogenannten Erinnerungsfaktor einzuführen. Dieser Erinnerungsfaktor bewirkt, daß in die jeweilige Übertragungsfunktion, die bei der aktuellen Schaltung des Stufenschalters neu berechnet wird, die Werte der vorangegangenen Schaltung nur zum Teil eingehen, d. h. daß sich der tatsächlich aktuell verwendete Anstieg der Übertragungsfunktion anteilig aus dem jeweils neu berechneten Anstieg und dem Anstieg aus der vorausgegangenen Schaltung zusammensetzt. Dies hat den großen Vorteil, daß sich ungenau ermittelte Anstiege nur in geringerem Umfang auswirken, da sie nur zum Teil in die Rechengänge eingehen. In besonders vorteilhafter Ausgestaltung des Verfahrens sind noch Plausibilitätsprüfungen vorgesehen, die die Auswirkungen bei einer fehlerhaften Berechnung des Anstieges begrenzen.

Das erfindungsgemäße Verfahren soll nachfolgend anhand von Zeichnungen beispielhaft noch näher erläutert werden. Es zeigen:

Figur 1     die bereits weiter oben erläuterten räumlichen Verhältnisse an einem Stufenschalter

Figur 2     die schematische Darstellung einer Übertragungsfunktion MSt = f(MPw) als mathematisches Modell

Figur 3     eine schematische Darstellung des Drehmomentverlaufes an einem Stufenschalter und die zusätzliche Zerlegung der Schaltsequenz und damit des Drehmomentverlaufes in bestimmte, charakteristische Abschnitte, sogenannte Fenster

Figur 4     einen Teil eines ersten erfindungsgemäßen Verfahrens als Ablaufdiagramm

Figur 5     einen Teil eines zweiten erfindungsgemäßen Verfahrens ebenfalls als Ablaufdiagramm.

Die in Figur 1 dargestellte prinzipielle gerätetechnische Anordnung des Stufenschalters und des ihn betätigenden Motorantriebes wurde bereits weiter oben erläutert. Diese Anordnung ergibt sich nicht nur bei der Erfindung, sondern sie wird bei jeder Überwachung eines Stufenschalters vorgefunden.

Figur 2 zeigt den prinzipiellen mathematischen Zusammenhang zwischen dem berechneten Verlauf des Drehmomentes MPw und dem tatsächlichen Verlauf des Drehmomentes am Stufenschalter MSt in linearer Näherung. Es ergibt sich ein Anstieg m und ein Offset n; letzteres ist der absolute Betrag, um den die Drehmomentverläufe relativ zueinander verschoben sind. Dieser Betrag entspricht dem konkreten Drehmoment, das notwendig ist, um den Antriebszug zu betätigen und dessen Reibungen zu überwinden, ohne daß am Stufenschalter selbst eine Betätigung geschieht. Dieser Zusammenhang MSt = f(MPw), d. h. das Übertragungsverhältnis, bleibt nicht unverändert; sowohl m als auch n ändern sich während des "Lebens", d. h. der Betriebsdauer des Stufenschalters, des Getriebezuges und des Motorantriebes.

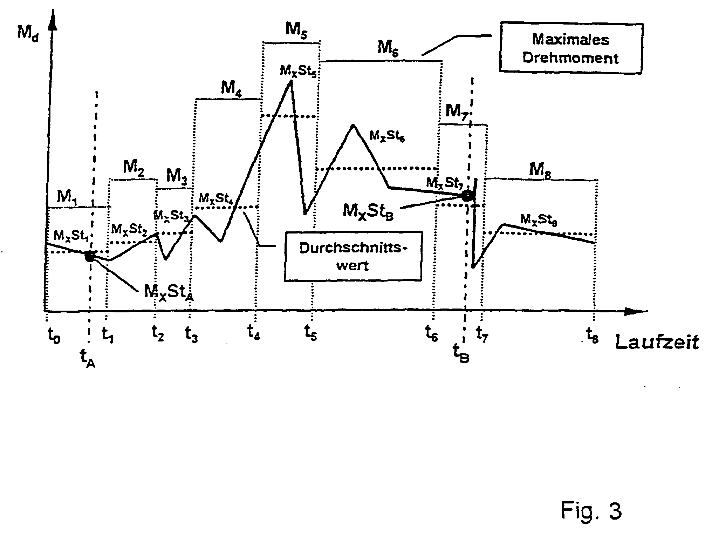

Figur 3 zeigt schematisch ein aus der DE 197 46 574 C1 bereits bekanntes und besonders vorteilhaftes Verfahren zur prinzipiellen Oberwachung eines Stufenschalters. Hierbei sind folgende Zeitbereiche dargestellt.

| Zeit | Nenndrehmoment | Funktionsablauf |
|------|----------------|-----------------|
| $t_0$ - $t_1$ | $M_1$ | Malteserrolleneinlauf |
| $t_1$ - $t_2$ | $M_2$ | Feinwählerabschalten |
| $t_2$ - $t_3$ | $M_3$ | Vorwählerabschalten |
| $t_3$ - $t_4$ | $M_4$ | Feinwähler- u. Vorwählerumschalten |
| $t_4$ - $t_5$ | $M_5$ | Vorwähleraufschalten |
| $t_5$ - $t_6$ | $M_6$ | Feinwähleraufschalten u. Malteserrollenauslauf |
| $t_6$ - $t_7$ | $M_7$ | Lastumschaltersprung |
| $t_7$ - $t_8$ | $M_8$ | Nachlauf |

Dabei wird der Drehmomentverlauf am Stufenschalter während einer Umschaltsequenz in Form einer Funktion MSt =f(t), d. h. zeitabhängig, erfaßt und in typische Funktions- und damit Zeitbereiche, hier $t_0$ - $t_1$, $t_1$ - $t_2$,..., $t_7$ - $t_8$ unterteilt, die sogenannten Fenster. Aus dem Ist-Drehmomentverlauf innerhalb jedes Fensters wird der jeweilige Durchschnittswert des Drehmomentverlaufes innerhalb dieses Fensters oder ein anderer, nach einer gewählten Rechenvorschrift ermittelter repräsentativer Wert für dieses Fenster, mit einem vorab fest eingestellten maximal zulässigen Drehmomentwert, dem jeweiligen Sollwert, verglichen. In der Darstellung in Figur 3 sind die entsprechenden Ist-Drehmomentverläufe in den einzelnen Fenstern mit $M_xSt1$-...$M_xSt8$ bezeichnet. Der Index "x" bezeichnet dabei die jeweilige Schaltung des Stufenschalters; nach Neuinstallation wird der Index bei der ersten Betätigung des Stufenschalters mit 1 beginnen und so fort. Die nachgestellten Ziffern "1" bis "8" bezeichnen das jeweilige Fenster, zu dem der entsprechende Ist-Drehmomentverlauf gehört. Die dick punktierte Linie in Figur 3 stellt die entsprechenden Durchschnittswerte oder anderweitig ermittelten repräsentativen Werte des Ist-Drehmomentverlaufes für jedes Fenster dar, die dünn punktierte Linie stellt die im jeweiligen Fenster zulässigen Maximalwerte M1...M8 dar, bei deren Überschreitung durch den jeweiligen Durchschnittswert oder anderweitig ermittelten repräsentativen Wert eine Fehlermeldung, eine Warnung, ein Alarm oder dgl. ausgelöst wird.

Es werden also bei jeder nacheinander ablaufenden Umschaltung x = 1, 2...bis zum Lebensende des Stufenschalters immer die entsprechenden Ist-Drehmomentverläufe MSt benötigt, die, wie bereits erläutert, alterungs- und temperaturabhängig in sich verändernder Relation zu den errechneten Drehmomentverläufen MPw aufgrund der Wirkleistungsaufnahme des Antriebsmotors stehen.

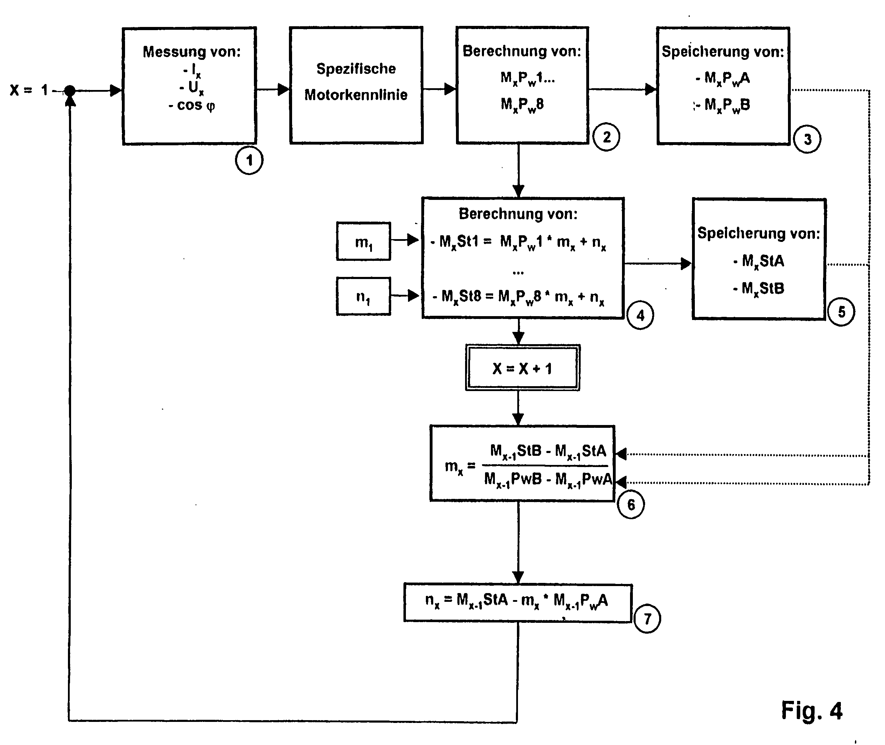

Figur 4 zeigt schematisch den wesentlichen Teil des ersten erfindungsgemäßen Verfahrens gemäß Patentanspruch 1:

Zunächst erfolgt auf an sich bekannte Weise eine Messung der Spannung U, des Stromes I und des Phasenwinkels cos φ am Antriebsmotor während der Betätigung des Stufenschalters (Schritt 1). Aus diesen Werten werden unter Zuhilfenahme einer nicht flüchtig gespeicherten spezifischen Motorkennlinie des entsprechenden Antriebsmotors die jeweiligen Drehmomentvenäufe $M_xPw1...M_xPw8$ für jedes der Fenster 1 bis 8 berechnet (Schritt 2). Diese weiter oben bereits beschriebene Unterteilung des gesamten Drehmomentverlaufes in typische Fenster, d.h. zeitlich nacheinander ablaufende Teilbereiche und damit Teil-Drehmomentverläufe, ist hier besonders vorteilhaft und wird daher mit erläutert, sie ist aber nicht notwendigerweise Bestandteil des erfindungsgemäßen Verfahrens. Es ist ebenso, wenn auch mit höherem Aufwand, möglich, direkt die im wesentlichen kontinuierlich berechneten Werte für das Drehmoment am Antriebsmotor als Grundlage für eine nachfolgende Überwachung zu nehmen. Bei der erstmaligen Betätigung des Stufenschalters nach dessen Installation beginnt die dargestellte Berechnung mit x = 1. Nachfolgend werden zwei charakteristische Werte innerhalb des gesamten berechneten Drehmomentverlaufes, d. h. innerhalb aller bei der Umschaltung durchlaufener Fenster, flüchtig gespeichert Im in Figur 4 dargestellten Beispiel sind dies die Werte $M_xPwA$ zum Zeitpunkt $t_A$ kurz vor der Feinwählerbetätigung sowie $M_xPwB$ zum Zeitpunkt $t_B$ beim Kraftspeicheraufzug. Es können auch andere charakteristische Werte vorgesehen werden; wichtig ist dabei nur, daß die zugrundeliegenden Zeitpunkte, bei denen diese einmal gewählten charakteristischen Werte auftreten und als solche erfaßt werden, während des gesamten erfindungsgemäßen Verfahrens unverändert bleiben. Welche Werte im konkreten Fall dafür ausgewählt werden, hängt letztlich von den konstruktiven Gegebenheiten der verwendeten Geräte ab. Der im hier erläuterten Beispiel gewählte charakteristische Wert zum Zeitpunkt $t_B$ etwa ist deswegen vorteilhaft, weil zu diesem Zeitpunkt nur die Feder des Kraftspeichers im Stufenschalter aufgezogen wird; die im wesentlichen während der gesamten Lebensdauer unverändert bleibende Federkraft des Kraftspeichers dient hierbei als "Normal". Bei der hier zunächst erläuterten erstmaligen Betätigung des Stufenschalters mit der Bedingung x = 1 ergeben sich also für die flüchtige Speicherung die Werte $M_1PwA$ und $M_1PwB$ (Schritt 3). Nachfolgend erfolgt bei der ersten Schaltung x = 1 die Berechnung der tatsächlichen Drehmomentwerte am Stufenschalter nach den Formeln:

$$M_xSt1 = M_xPw1 \cdot m_x + n_x \text{ usw. bis } M_xSt8 = M_xPw8 \cdot m_x + n_x \text{ (Schritt 4).}$$

Nach der Berechnung dieser Werte werden wiederum die beiden charakteristischen Werte $M_xStA$ und $M_xStB$, bei der ersten Betätigung des Stufenschalters also $M_1StA$ und $M_1STB$ flüchtig gespeichert (Schritt 5). Es stehen also flüchtig gespeichert für die beiden Zeitpunkte $t_A$ und $t_B$ bei der Umschaltsequenz sowohl die beiden aus der Wirkleistung direkt berechneten als auch die beiden mittels m und n daraus berechneten tatsächlichen charakteristischen Drehmomentwerte zur Verfügung (Schritte 3 und 5). Aus den berechneten Ist-Drehmomentverläufen (Schritt 4) wird jetzt durch den an sich bekannten Vergleich eines daraus ermittelten repräsentativen Drehmomentwertes, z. B. des Mittelwertes wie weiter oben bereits beschrieben, mit vorab festgelegten maximalen Sollwerten in jedem Fenster eine Entscheidung über die Funktionsfähigkeit des Stufenschalters getroffen. Dieser Vergleich zwischen Ist-Drehmomentwerten und Soll-Drehmomentwerten ist in Figur 4 nicht dargestellt. Die für die Berechnung bei der erstmaligen Betätigung des Stufenschalters erforderlichen Werte $m_1$ und $n_1$ werden vorab festgelegt, d. h. vom Verfahren vorgegeben. Bei der ersten Schaltung erfolgt also noch keine Korrektur der Übertragungsfunktion.

Bei der nächsten Betätigung des Stufenschalters erhöht sich der Index auf x = 2. Es erfolgt eine - erstmalige Korrektur, d. h. die vom System ursprünglich vorgegebenen Werte $m_1$, $n_1$ -der Übertragungsfunktion werden nicht weiter verwendet, sondern es werden neue Werte $m_2$, $n_2$ berechnet. Dies geschieht nach der Formel:

$$m_x = \frac{M_{x-1}StB - M_{x-1}StA}{M_{x-1}PwB - M_{x-1}PwA}$$

bzw.

$$n_x = M_{x-1}StA - m_x - M_{x-1}PwA$$

(Schritte 6 und 7). Diese Berechnungen geschehen unter Zuhilfenahme der in den Schritten 3 und 5 flüchtig gespeicherten charakteristischen Werte für x =1, d. h. die vorausgegangene Schaltung. Diese in den Schritten 6 und 7 neu berechneten Werte für $m_2$ und $n_2$ werden nun verwendet, um aus dem bei der zweiten Schaltung des Stufenschalters aus I, U, cos $\varphi$ ermittelten Drehmomentverlauf $M_2Pw1...M_2Pw8$ den tatsächlichen Drehmomentverlauf $M_2St1...M_2St8$ mit einer korrigierten Übertragungsfunktion zu berechnen. Aus diesem solcherart ermittelten Drehmomentverlauf wird dann wieder in jedem Fenster ein repräsentativer Drehmomentwert gebildet und dieser jeweils mit dem maximalen Wert M1...M8 verglichen. Gleichzeitig werden in den Schritten 3 und 5 die jeweils flüchtig gespeicherten charakteristischen Werte für das Drehmoment zu den beiden vorgegebenen Zeitpunkten mit den entsprechenden charakteristischen Werten aus der vergangenen Betätigung überschrieben. D. h., im Schritt 3 werden die bisher gespeicherten Werte $M_1PwA$ und $M_1PwB$ überschrieben durch die Werte $M_2PwA$ und $M_2PwB$; im Schritt 5 werden die bisher gespeicherten Werte $M_1StA$ und $M_1StB$ überschrieben durch die Werte $M_2StA$ und $M_2StB$. Diese neuen, jetzt flüchtig gespeicherten Werte stehen dann wiederum bei der nächsten Schaltung des Stufenschalters, d. h. bei x = 3, für die Berechnung von $m_3$ und $n_3$, d. h. für die Berechnung wiederum der neuen Übertragungsfunktion, zur Verfügung.

Zusammengefaßt ermittelt das beschriebene Verfahren bei jeder Schaltung des Stufenschalters aufgrund der charakteristischen Werte für das Drehmoment aus der vorausgegangenen Schaltung, die flüchtig gespeichert sind, die Übertragungsfunktion neu. Mit dieser neuen Übertragungsfunktion wird dann der korrigierte Ist-Drehmomentverlauf am Stufenschalter berechnet Gleichzeitig werden aus den Drehmomentverläufen wiederum korrespondierende neue charakteristische Werte gespeichert, die dann bei der nächsten Schaltung ihrerseits zur Berechnung einer wiederum korrigierten Übertragungsfunktion dienen usw.

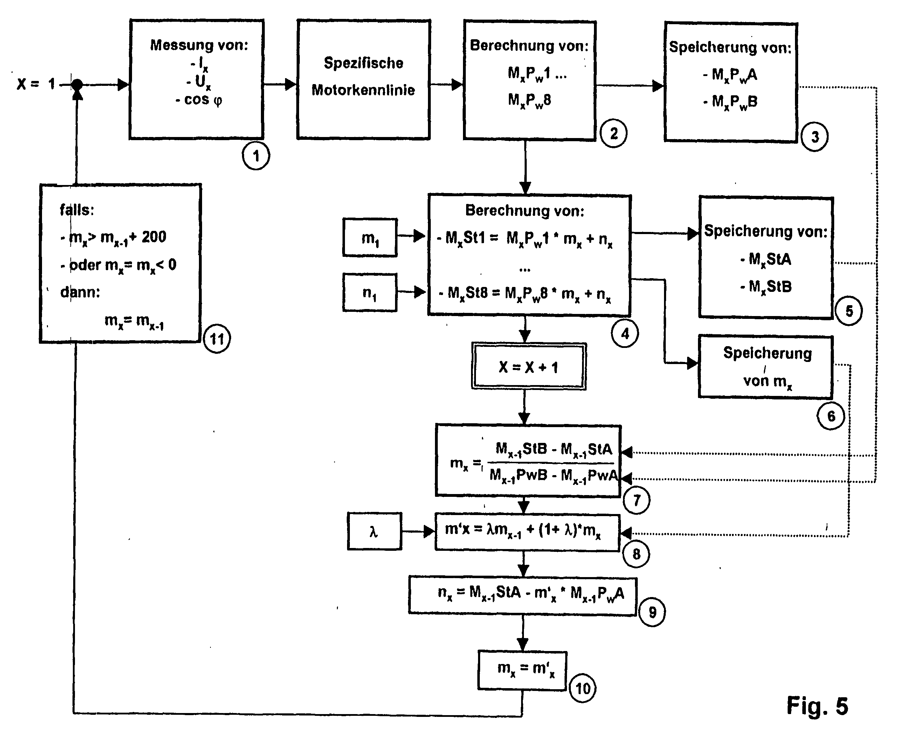

In Figur 5 sind die wesentlichen Teile eines zweiten erfindungsgemäßen Verfahrens graphisch dargestellt. Die anhand von Figur 4 erläuterten Schritte 1 bis 5 laufen auch bei diesem Verfahren unverändert ab. Zusätzlich wird jedoch der entsprechende ermittelte Wert $m_x$, d. h. der Wert des jeweiligen Anstieges, ebenfalls flüchtig gespeichert. Ebenso wie zu Figur 4 erläutert, ist bei der ersten Schaltung nach Inbetriebnahme der entsprechende Wert $m_1$ vom System vorgegeben. Bei der jeweils nachfolgenden nächsten Schaltung, bei der der Index x sich um 1 erhöht, also bei der zweiten Schaltung auf x = 2, wird im Schritt 7 wiederum der entsprechende Wert für $m_x$, hier also $m_2$, ermittelt; dies geschieht nach derselben Formel, wie sie in Figur 4 als Schritt 6 aufgeführt ist. Neu ist hingegen der nachfolgend zusätzlich ablaufende Schritt 8. Bei diesem wird, beginnend mit der zweiten Schaltung des Stufenschalters, d. h. x = 2, aus dem jeweils neu ermittelten Wert $m_x$, also z. B. $m_2$, und dem flüchtig gespeicherten vorhergehenden Wert $m_{x-1}$, hier also $m_1$, ein effektiver Wert $m'_x$ nach der Formel:

$$m'_x = \lambda \cdot m_{x-1} + (1-\lambda) \cdot m_x$$

berechnet $\lambda$ ist dabei der sogenannte Erinnerungswert, ein Wert zwischen 0 und 1, der angibt mit welchen Anteilen der vorhergehende Wert $m_{x-1}$, hier also der vorab flüchtig gespeicherte Wert $m_1$, und der gerade berechnete neue Wert $m_x$, hier also $m_2$, den effektiven Wert $m'_x$, hier also $m'_2$, prägen. Der Wert für $\lambda$ wird vorgegeben, er kann z. B. 0,75 betragen. Im nachfolgenden Schritt 10 schließlich wird dieser effektive Wert $m'_x$ zum neuen Wert $m_x$ gemacht, der weiter verwendet wird. Bei diesem Verfahren werden also nicht nur die Werte aus der letzten vorangegangenen Schaltung benutzt, um die neuen Werte $m_x$ und $n_x$ für das Übertragungsverhalten zu ermitteln, zusätzlich wird auch noch über den erläuterten Erinnerungsfaktor $\lambda$ die Historie der weiter zurückliegenden Schaltungen und der sich daraus ergebenden früheren Werte für m berücksichtigt. Bei fortschreitenden Schaltungen des Stufenschalters wird dabei der Einfluß der weiter zurückliegenden Schaltungen immer geringer. Dieses Verfahren ermöglicht es, den Einfluß von Fehlberechnungen oder "Ausreißern" bei früheren Drehmomentverläufen zu minimieren.

Bei beiden erläuterten Verfahren ist es besonders vorteilhaft, eine Plausibilitätskontrolle für die jeweils neu berechneten Werte $m_x$ und $n_x$ zusätzlich einzufügen, um zu verhindern, daß temporäre Fehler oder Sondereinflüsse die Ergebnisse dauerhaft verfälschen. Eine solche Plausibilitätskontrolle ist in Figur 5, hier als Schritt 11, eingefügt, sie kann aber ebenso gut auch beim in Figur 4 erläuterten ersten erfindungsgemäßen Verfahren verwendet werden. Im Schritt 11 in Figur 5 sind zwei Bedingungen angegeben, bei denen keine Korrektur erfolgen soll, d. h. der bisherige Wert $m_{x-1}$ auch den nachfolgenden neuen Wert $m_x$ ergeben soil. Dies ist einerseits der Fall, wenn der neu berechnete Wert um mehr als einen Grenzwert a vom bisherigen Wert abweicht oder wenn er einen negativen wert ergibt, was anhand des zugrundeliegen mathematischen Modells nicht möglich ist. In diesen Fällen wird keine Korrektur vorgenommen und die Fehlberechnung einfach "ausgeblendet". Es ist ebenso auch möglich, diesen Schritt der Plausibilitätskontrolle zwischen den Schritten 7 und 8 in Figur 5 vorzusehen, so daß keine fehlerhafte Berechnung des erinnerungsbezogenen Wertes für $m'_x$ erfolgen kann.

**Patentansprüche**

1.  Verfahren zur Überwachung eines Stufenschalters,
    wobei während dessen Betätigung, d. h. während des Umschaltvorganges, Strom, Spannung und Phasenwinkel an einem elektrischen Antriebsmotor eines zur Betätigung des Stufenschalters vorgesehenen Motorantriebes im wesentlichen kontinuierlich gemessen werden,
    aus diesen gemessenen Werten der Verlauf der jeweils aktuell vom Antriebsmotor aufgenommenen wirkleistung berechnet wird,
    daraus wiederum anhand der spezifischen Motorkennlinie des Antriebsmotors der an ihm wirksame Drehmomentverlauf berechnet wird,
    **dadurch gekennzeichnet,**
    **daß** bei jedem Umschaltvorgang (x = 1, 2, 3,...) des Stufenschalters

    -   aus der Menge der berechneten Werte für den Drehmomentverlauf am Antriebsmotor ($M_x$ Pw1...$M_x$ Pw8) die charakteristischen Werte zu zwei vorab festgelegten, bei jedem Umschaltvorgang gleichen, Zeitpunkten ($t_A$, $t_B$) für das Drehmoment am Antriebsmotor ($M_x$ PwA, $M_x$ PwB) ausgewählt und gespeichert werden,
    -   **daß** aus der Menge der berechneten Werte für den Drehmomentverlauf am Antriebsmotor ($M_x$ Pw1...$M_x$ Pw8) die korrespondierenden Werte für den Drehmomentverlauf am Stufenschalter ($M_x$ St1...$M_x$ St8) nach der Be-ziehung

    $$M_x St1 = M_x Pw1 \cdot m_x + n_x ,..., M_x St8 = M_x PW8 \cdot m_x + n_x ,....$$

    berechnet werden und dieser berechnete Drehmomentverlauf überwacht und mit vorab festgelegten Grenzwerten verglichen wird, wobei die Werte für $m_x$ und $n_x$ aus den beim vorangegangenen letzten Umschaltvorgang (x-1) gespeicherten charakteristischen Werten für das Drehmoment am Antriebsmotor einerseits ($M_{x-1}$ PwA, $M_{x-1}$ PwB) und am Stufenschalter andererseits ($M_{x-1}$ StA, $M_{x-1}$ StB) jeweils zu den beiden Zeitpunkten ($t_A$, $t_B$) nach den Beziehungen

    $$m_x = \frac{M_{x-1}StB - M_{x-1}StA}{M_{x-1}PwB - M_{x-1}PwA}$$

    und

    $$n_x = M_{x-1}StA - m_x \cdot M_{x-1}PwA$$

    berechnet werden,
    -   **daß** aus der Menge der berechneten Werte für den Drehmomentverlauf am Stufehschalter ($M_x$ St1...$M_x$ St8) die charakteristischen Werte zu den beiden vorab festgelegten Zeitpunkten ($t_A$, $t_B$) für das Drehmoment am Stufenschalter ($M_x$ StA, $M_x$ StB) ebenfalls ausgewählt und gespeichert werden.

2.  Verfahren nach Anspruch 1,
    **dadurch gekennzeichnet,**
    **daß** nach jedem Umschaltvorgang die charakteristischen Werte des vorangegangenen Umschaltvorganges (x-1) für das Drehmoment am Antriebsmotor ($M_{x-1}$ PwA, $M_{x-1}$ PwB) und am Stufenschalter ($M_{x-1}$ StA, $M_{x-1}$ StB) durch die entsprechenden charakteristischen Werte des gerade abgeschlossenen, d. h. beendeten nachfolgenden Umschaltvorganges (x) überschrieben werden.

3.  Verfahren nach Anspruch 1 oder 2,
    **dadurch gekennzeichnet,**
    **daß** vor dem erstmaligen Umschaltvorgang (x = 1), d. h. im unbetätigten Neuzustand des Stufenschalters oder nach Rücksetzung, die entsprechenden Werte für $m_x$ und $n_x$ ($m_1$, $n_1$), extern vorgegeben werden.

4.  Verfahren nach einem der vorangehenden Ansprüche,
    **dadurch gekennzeichnet,**
    **daß** zur Berechnung von $m_x$ ein zusätzlicher Erinnerungsfaktor $\lambda$ berücksichtigt wird, der < 1 ist, derart, daß ein

korrigierter Wert $m'_x$ nach der Rechenvorschrift

$$m'_x = \lambda \cdot 8\, m_{x-1} + (1-\lambda) \cdot m_x$$

ermittelt wird.

5. Verfahren nach einem der vorangehenden Ansprüche,
   **dadurch gekennzeichnet,**
   **daß** zusätzlich nach jeder Berechnung von $m_x$ eine Plausibilitätskontrolle vorgenommen wird, derart, daß $m_x$ mit dem beim vorangegangenen Umschaltvorgang ermittelten und gespeicherten Wert $m_{x-1}$ verglichen wird und, falls $m_x < 0$ oder $m_x > m_{x-1} + a$ ist, wobei a eine vorgegebene Konstante darstellt, $m_x = m_{x-1}$ gelten, d. h. keine Veränderung für diesen Wert gegenüber dem vorangegangenen letzten Umschaltvorgang (x-1) wirksam werden soll.

6. Verfahren nach einem der vorangehenden Ansprüche,
   **dadurch gekennzeichnet,**
   **daß** die Werte für den Drehmomentverlauf am Antriebsmotor ($M_x$ Pw1...$M_x$ PW8) und/oder am Stufenschalter ($M_x$ St1...$M_x$ St8) in typische Funktions- bzw. Zeitbereiche, sogenannte Fenster, unterteilt werden und für jedes Fenster nach einer vorab festgelegten Rechenvorschrift ein repräsentativer einziger Wert für das entsprechende Drehmoment berechnet wird, derart, daß die repräsentativen Werte aller Fenster dem weiteren Verfahren zur Überwachung zugrundegelegt werden, d. h. mit den vorab festgelegten Grenzwerten für jedes Fenster verglichen werden.

**Claims**

1. Method of monitoring a tap changer, wherein during actuation thereof, i.e. during the switching-over process, current, voltage and phase angle at an electric drive motor of a motor drive provided for actuation of the tap changer are measured substantially continuously, the course of the respective actual effective power taken up by the drive motor is calculated from these measured values, and the course of the torque effective at the drive motor is in turn calculated from the effective power on the basis of the specific motor characteristic curve of the drive motor, **characterised in that** in each switching-over process (x = 1, 2, 3, ...) of the tap changer

   - from the amount of the calculated values for the course of the torque at the drive motor ($M_x$Pw1 ... $M_x$Pw8) the characteristic values at two previously established instants ($t_A$, $t_B$), which are the same for each switching-over process, for the torque at the drive motor ($M_x$PwA, $M_x$PwB) are selected and stored,
   - that from the amount of the calculated values for the course of the torque at the drive motor ($M_x$Pw1 ... $M_x$Pw8) the corresponding values for the course of the torque at the tap changer ($M_x$St1 ... $M_x$St8) are calculated according to the equation

   $$M_x St1 = M_x Pw1 \cdot m_x + n_x, ..., M_x St8 = M_x Pw8 \cdot m_x + n_x, ...$$

   and this calculated torque course is monitored and compared with previously established limit values, wherein the values for $m_x$ and $n_x$ are calculated from the characteristic values, which were stored for, the preceding last switching-over process (x-1), for the torque at the drive motor on the one hand $M_{x-1}$PwA, $M_{x-1}$ PwB) and at the tap changer on the other hand ($M_{x-1}$StA, $M_{x-1}$StB) respectively at the two instants ($t_A$, $t_B$), according to the equations

   $$m_x = \frac{M_{x-1}StB - M_{x-1}StA}{M_{x-1}PwB - M_{x-1}PwA}$$

   and

   $$n_x = M_{x-1}StA - m_x \cdot M_{x-1}PwA,$$

   - that from the amount of the calculated values for the course of torque at the tap changer ($M_x$St1 ... $M_x$St8) the

characteristic values at the two previously established instants ($t_A$, $t_B$) for the torque at the tap changer ($M_x StA$, $M_x StB$) are similarly selected and stored.

2. Method according to claim 1, **characterised in that** after each switching-over process the characteristic values of the preceding switching over process (x-1) for the torque at the drive motor ($M_{x-1}PwA$, $M_{x-1}PwB$) and at the tap changer ($M_{x-1}StA$, ... $M_{x-1}StB$) are written over by the corresponding characteristic values of the just terminated, i.e. concluded, succeeding switching-over process (x).

3. Method according to claim 1 or 2, **characterised in that** the corresponding values for $m_x$ and $n_x$ ($m_1$, $n_1$) are externally predetermined prior to the first switching-over process (x = 1), i.e. in the unactuated new state of the tap changer or after resetting.

4. Method according to one of the preceding claims, **characterised in that** for calculation of $m_x$ an additional memory factor $\lambda$ is considered, which is less than 1, in such a manner that a corrected value $m'_x$ is ascertained according to the computing rule

$$m'_x = \lambda \cdot m_{x-1} + (1 - \lambda) \cdot m_x.$$

5. Method according to one of the preceding claims, **characterised in that** additionally after each calculation of $m_x$ the plausibility check is undertaken in such a manner that $m_x$ is compared with the value $m_{x-1}$, ascertained and stored in the preceding switching-over process and if $m_x < 0$ or $m_x > m_{x-1} + a$, wherein a represents a predetermined constant, it applies that $m_x = m_{x-1}$, i.e. there shall be no change for this value relative to the preceding last switching-over process (x-1).

6. Method according to one of the preceding claims, **characterised in that** the values for the course of torque at the drive motor ($M_x Pw1$ ... $M_x Pw8$) and/or at the tap changer ($M_x St1$ ... $M_x St8$) are subdivided into typical functional or time ranges, i.e. so-called windows, and a representative single value for the corresponding torque is calculated for each window in accordance with a previously established computing rule in such a manner that the representative values of all windows provide the basis for the further monitoring process, i.e. are compared with the previously established limit values values for window.

**Revendications**

1. Procédé de surveillance d'un commutateur à gradins, dont on mesure pendant l'actionnement c'est-à-dire lors de la commutation, le courant, la tension et l'angle de phase pour l'essentiel continuellement sur un moteur d'entraînement électrique d'un entraînement motorisé prévu pour l'actionnement du commutateur à gradins, on calcul l'évolution de la puissance effective réellement absorbée par le moteur d'entraînement à partir de ces valeurs mesurées, et on calcule à partir de là, l'évolution du couple de rotation efficace sur le moteur d'entraînement à l'aide de la courbe caractéristique spécifique de celui-ci,
**caractérisé en ce qu'**
à chaque commutation (x = 1, 2, 3, ...) du commutateur à gradins

   - à partir de la quantité des valeurs calculées pour l'évolution du couple de rotation sur le moteur d'entraînement ($M_x Pw1$ ... $M_x Pw8$), on sélectionne et on mémorise, les valeurs caractéristiques à deux moments ($t_A$, $t_B$) prédéterminés identiques à chaque commutation pour le couple de rotation sur le moteur d'entraînement ($M_x PwA$, $M_x PwB$)
   - à partir de la quantité des valeurs calculées pour l'évolution du couple de rotation sur le moteur d'entraînement ($M_x Pw1$ ... $M_x Pw8$), les valeurs correspondantes pour l'évolution du couple de rotation sur le commutateur à gradins ($M_x St1$ ... $M_x St8$) sont calculées selon la relation

$$M_x St1 = M_x Pw1 - mx + n_x,..., M_x St8 = M_x Pw8 - m_x + n_x,...$$

et cette évolution calculée du couple de rotation est surveillée et comparée avec des valeurs limites prédéterminées, les valeurs pour $m_x$ et $n_x$ étant calculées à partir des valeurs caractéristiques mémorisées lors de la commutation précédente (x-1) pour le couple de rotation sur le moteur d'entraînement ($M_{x-1} PwA_1$, $M_{x-1}$

PwB) d'une part et sur le commutateur à gradins ($M_{x-1}$ StA, $M_{x-1}$ StB) d'autre part, respectivement aux deux moments ($t_A$, $t_B$) selon les relations

$$m_x = \frac{M_{x-1}STB - M_{x-1}StA}{M_{x-1}PwB - M_{x-1} - PwA}$$

$$n_x = M_{x-1}StA - m_x - M_{x-1}PwA$$

- à partir de la quantité des valeurs calculées pour l'évolution du couple de rotation sur le commutateur à gradins ($M_x$ St1 ... $M_x$ St8), les valeurs caractéristiques aux deux moments ($t_A$, $t_B$) prédéterminés pour le couple de rotation sur le commutateur à gradins ($M_x$ StA, $M_x$ StB) sont également sélectionnées et mémorisées.

**2.** Procédé selon la revendication 1,
**caractérisé en ce qu'**
après chaque commutation, les valeurs caractéristiques de la commutation précédente (x-1) pour le couple de rotation sur le moteur d'entraînement ($M_{x-1}$ PwA, $M_{x-1}$ PwB) et sur le commutateur à gradins ($M_{x-1}$StA, $M_{x-1}$ StB) sont remplacées par les valeurs caractéristiques correspondantes de la commutation (x) suivante, c'est-à-dire qui vient juste de se terminer.

**3.** Procédé selon la revendication 1 ou 2,
**caractérisé en ce qu'**
avant la toute première commutation (x = 1), c'est-à-dire à l'état neuf non actionné du commutateur à gradins ou après une remise à zéro, les valeurs correspondantes pour $m_x$ et $n_x$ ($m_1$, $n_1$) sont prédéterminées en externe.

**4.** Procédé selon l'une quelconque des revendications précédentes,
**caractérisé en ce que**
pour le calcul de $m_x$, on tient compte d'un facteur d'avertissement $\lambda$ supplémentaire, qui est < 1 pour ainsi déterminer une valeur corrigée $m'_x$ selon la règle de calcul

$$m'_x = \lambda \cdot m_{x-1} + (1 - \lambda) \cdot m_x$$

**5.** Procédé selon l'une quelconque des revendications précédentes,
**caractérisé en ce qu'**
après chaque calcul de $m_x$ on procède en outre à un contrôle de plausibilité en comparant $m_x$ avec la valeur $m_{x-1}$ déterminée et mémorisée lors de la commutation précédente, et si $m_x$ est < 0 ou $m_x$ est > $n_{x-1}$ + a, a représentant une constante prédéterminée, $m_x$ vaut $m_{x-1}$, c'est-à-dire qu'aucune modification pour cette valeur ne doit intervenir par rapport à la commutation précédente (x-1).

**6.** Procédé selon l'une quelconque des revendications précédentes,
**caractérisé en ce que**
les valeurs pour l'évolution du couple de rotation sur le moteur d'entraînement ($M_x$ Pw1 ... $M_x$ Pw8) et/ ou sur le commutateur à gradins ($M_x$ St1 ... $M_x$ St8) sont réparties dans des zones de fonctionnement ou de temps appelées créneaux, et pour chaque créneau une seule valeur représentative est calculée selon une règle de calcul prédéterminée pour le couple de rotation correspondant, de telle sorte que les valeurs représentatives de tous les créneaux constituent la base pour la suite du procédé de surveillance, c'est-à-dire qu'elles sont comparées avec les valeurs limites prédéterminées pour chaque créneau.

Fig. 1

Fig. 2

Fig. 3

EP 1 155 338 B1

X = 1

**Messung von:**
- $I_x$
- $U_x$
- $\cos \varphi$

(1)

**Spezifische Motorkennlinie**

**Berechnung von:**
$M_xP_w1...$
$M_xP_w8$

(2)

**Speicherung von:**
- $M_xP_wA$
- $M_xP_wB$

(3)

$m_1$

$n_1$

**Berechnung von:**
- $M_xSt1 = M_xP_w1 * m_x + n_x$
...
- $M_xSt8 = M_xP_w8 * m_x + n_x$

(4)

**Speicherung von:**
- $M_xStA$
- $M_xStB$

(5)

$X = X + 1$

$$m_x = \frac{M_{x-1}StB - M_{x-1}StA}{M_{x-1}PwB - M_{x-1}PwA}$$

(6)

$$n_x = M_{x-1}StA - m_x * M_{x-1}P_wA$$

(7)

**Fig. 4**

X = 1

**Messung von:**
- $I_x$
- $U_x$
- $\cos \varphi$

(1)

**Spezifische Motorkennlinie**

**Berechnung von:**
$M_x P_w 1 \ldots$
$M_x P_w 8$

(2)

**Speicherung von:**
- $M_x P_w A$
- $M_x P_w B$

(3)

$m_1$

$n_1$

**Berechnung von:**
- $M_x St1 = M_x P_w 1 * m_x + n_x$
...
- $M_x St8 = M_x P_w 8 * m_x + n_x$

(4)

**Speicherung von:**
- $M_x StA$
- $M_x StB$

(5)

$X = X + 1$

**Speicherung von $m_x$**

(6)

$m_x = \dfrac{M_{x-1} StB - M_{x-1} StA}{M_{x-1} PwB - M_{x-1} PwA}$

(7)

$\lambda$

$m'x = \lambda m_{x-1} + (1 + \lambda)^* m_x$

(8)

$n_x = M_{x-1} StA - m'_x * M_{x-1} P_w A$

(9)

$m_x = m'_x$

(10)

**falls:**
- $m_x > m_{x-1} + 200$
- oder $m_x = m_x < 0$

**dann:**
$m_x = m_{x-1}$

(11)

**Fig. 5**

EP 1 155 338 B1